# EUROPEAN PATENT APPLICATION

(11) **EP 2 397 592 A1**
(43) Date of publication of application: **21.12.2011**
(21) Application number: 11382192.0
(22) Date of filing: 10.06.2011
(51) Int. Cl.: D04H 3/02, D04H 3/04, B32B 27/00

(54) **Nonwoven fabric with spinning pattern appearance**

(30) Priority: 18.06.2010 ES 201030943
(71) Applicant: Centro Tecnologico de Grupo Copo, S.L., 36416 Mos, Pontevedra (ES)
(72) Inventor: Domingues Barbosa da Frada, Diogo, 4825-420 SANTO TIRSO (PT)
(74) Representative: Carvajal y Urquijo, Isabel

(57) **Abstract**

Nonwoven fabric with spinning pattern appearance having a nonwoven fabric base (2, 3) on which some ornamental threads (4) are added and which by means of different separations and geometric configurations allow visual appearance variations in the resulting fabric (1) according to the characteristics and arrangement of said ornamentation threads (4). Applicable to formed and non-formed covering parts (5), ceilings, pillars or sunshades for automobiles among others.

## Description

### OBJET OF THE INVENTION

The present invention, as expressed in the statement of this descriptive memory, refers to a nonwoven fabric with spinning pattern appearance, the essential purpose of which consists of facilitating a fabric of the so-called nonwoven fabrics specially applicable to covering formed and non-formed parts, such as automobile ceilings, pillars or sunshades, to provide a high-quality normal fabric or upholstery look, also providing diverse possibilities of aesthetic and design variation. Thus, through the invention there can be obtained nonwoven parts that include a series of lines, curves, geometry and colours which, according to the threads used, their thickness, tone, distance between stitches or other structural characteristics allow the formation of all kinds of superficial appearances, which have, a preferred application in the manufacturing of interior ceilings, pillars or sunshades for automobiles where, conventionally, superficial "seams" are applied to the fabric during its manufacturing process, and which, with the nonwoven fabric of the invention, can be produced with an economic cost lower than the usual one and with excellent visual appearances. On the other hand, other applications are also possible, especially those that require formed and non-formed parts the appearance of which may need to be that of upholstery, covered with quality fabric and alike.

### BACKGROUND OF THE INVENTION'

The so-called nonwoven fabrics consisting of some natural or synthetic textile fibers are well known, in which the fiber density and the coherence between them are much lower than in conventional fabrics, and in some embodiments the sheet woven with nonwoven fabric may be easily broken by weak manual pulling. These nonwoven fabrics are often used for single-use, disposable products such as dishcloths, wipes and others since the material or textile fiber cost is considerably lower than the one required in conventional fabric;

On the other hand, there are known to be in the art ceilings, pillars or sunshades for automobile interiors, which are manufactured using formed parts, generally made of plastic, whose visible surface needs to have the appearance of a normal high quality fabric, in order to imitate good upholstery, embroidery and the like. For that purpose, plastics parts are covered with high quality fabrics, which imply economic inconveniencies as regards the high costs in labour, procedures and materials.

In another perspective, when it is desired to increase the aesthetic-visual appearance of a nonwoven fabric, according to the state of the art, the methods used are seaming additional elements, gluing normal fabric pieces, plastics films or alike on the nonwoven fabric sheet.

In the current state of the art, we do not know any nonwoven fabric with spinning pattern appearance that presents a nonwoven fabric base on which ornamentation threads are added with different separations and geometric configurations so as to allow visual appearance variation of the resulting fabric, as it is done by the nonwoven fabric of the present invention.

### DESCRIPTION OF THE INVENTION

In order to attain the objectives and avoid the aforementioned inconveniences, the invention consists of a nonwoven fabric with spinning pattern appearance, especially applicable to formed and non-formed covering parts, such as automobile ceilings, pillars or sunshades.

In a novel way, according to the invention, the fabric of this invention has a nonwoven fabric base on which ornamentation threads are added, which by means of different separations and geometric configurations allow visual appearance variations in the resulting fabric according to the characteristics and arrangement of said ornamentation threads.

According to different embodiments of the invention, for those ornamental threads, it is possible to use different material threads, different thickness threads and various chromatic tones which allow those visual appearance variations to be more noticeable.

On the other hand, also according to different embodiments of the invention, the aforementioned ornamental threads are incorporated at the nonwoven fabric base during the manufacturing process of such base, choosing its incorporation between a phase of that process and an afterward phase added to it.

Moreover, in different embodiments of the invention, such nonwoven fabric base can be made of braided fibers as a warp and weft.

In the preferred embodiment of the invention, the incorporation of the ornamental threads at the base of the nonwoven fabric is made by seaming.

Furthermore, the aforementioned resulting fabric of the invention can be connected to a formed or non-formed part by an action selected from: gluing, seaming, stapling, another conventional joining means and any combination thereof, so as to give those parts the aforementioned possibilities for the variation of their visual appearance.

Furthermore, the aforementioned fabric resulting of such base and the ornamentation threads can be provided with a reinforcement support.

Such reinforcement support can be selected from a material of textile fibers, plastic film, polyurethane, other standard supporting material and a combination thereof.

Furthermore, said resulting fabric provided with the aforementioned reinforcement support can be given a preform with heat and pressure.

With the described structure, the nonwoven fabric with spinning pattern appearance of the present invention presents the main advantage of providing an aesthetic appearance in different parts similar to a normal fabric with more expensive drawings or marks, having great applicability to the field of parts for automobile interiors, and particularly automobile ceilings, pillars or sunshades; enabling to obtain final products of high aesthetic value and low cost, in such a way that the advantages and inherent characteristics of nonwoven fabric are used, but giving them a visual effect of normal fabrics.

Next, to facilitate a better understanding of this descriptive memory, and forming part thereof, there are some accompanying figures which represent the object of the invention in an illustrative and non-limitative manner.

### BRIEF DESCRIPTION OF THE FIGURES

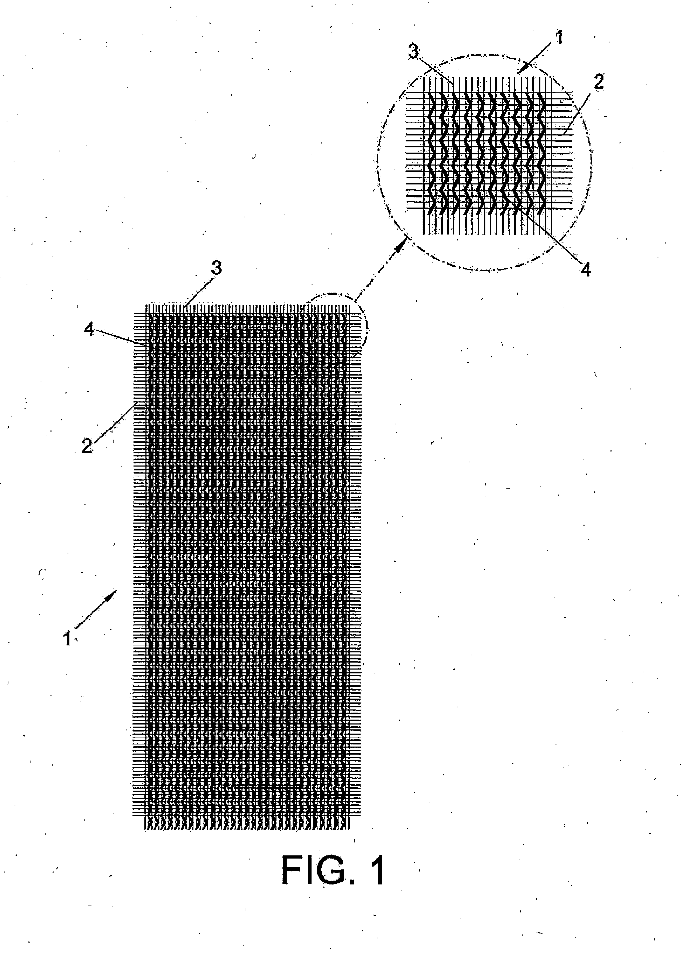

**Figure 1****.-** It represents a plan view of a nonwoven fabric sheet with spinning pattern appearance, manufactured according to the present invention, showing an amplified detail to better appreciate its structure.

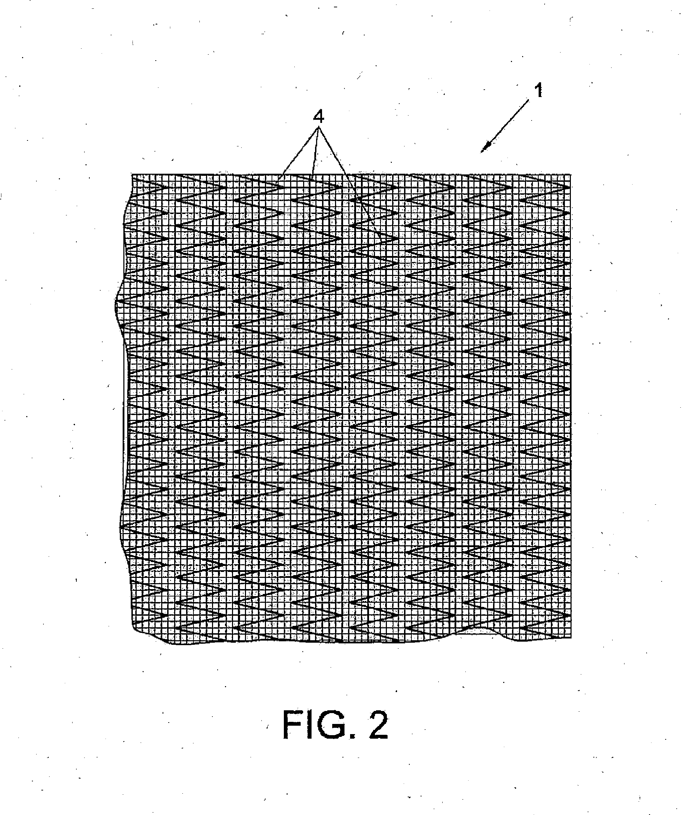

**Figure 2****.-** It is a plan and partial view of a nonwoven fabric sheet with spinning pattern appearance, manufactured according to the present invention, similar to the one in figure 1 but showing a slightly different arrangement of ornamental threads, so as to facilitate the appreciation of the visual appearance variations made possible by the fabric of the invention.

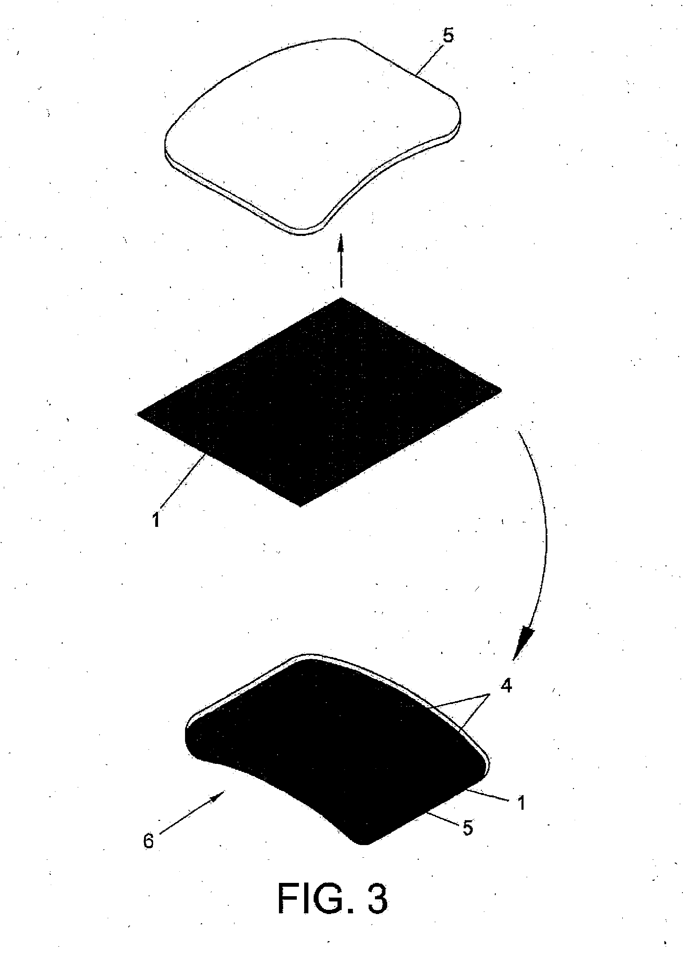

**Figure 3****.-** It represents a perspective view of a nonwoven fabric sheet with spinning pattern appearance, manufactured according to the present invention, similar to the preceding figures and exploded with respect to a formed part on which it is applied, showing in this exploded view the perspective of the referred part incorporating the nonwoven fabric.

### DESCRIPTION OF AN EMBODIMENT EXAMPLE OF THE INVENTION

The following is a description of an example of the invention relating to the references in the figures.

Thus, the nonwoven fabric with spinning pattern appearance of this example of the invention is applied to a formed part 5 corresponding to the ceiling of an automobile, the application being shown in figure 3.

The nonwoven fabric of the present example has a nonwoven fabric base configured by some warp threads 2 and some weft threads 3 with open weave design as it is shown in figures 1; though, in other examples it could have a different constitution, such as compact fibers and others.

On the nonwoven fabric base 2, 3 there are incorporated some ornamentation threads 4, which by diverse separations and geometric configurations allow visual appearance variations of the resulting fabric 1, according to the characteristics and arrangement of said ornamentation threads 4, showing two different arrangements of the threads 4 in figures 1 and 2, respectively.

Furthermore, these ornamentation threads 4 can have diverse thickness and different chromatic tones so as to make those visual appearance variations more noticeable.

On the other hand, the aforementioned ornamental threads 4 can be incorporated in the nonwoven fabric base 2, 3 during the manufacturing process of such base, producing its incorporation in a phase of said process or in a later phase added to it.

In the present example, the ornamental threads 4 are incorporated to the base 2, 3 by seaming, although other means, such as gluing, are not discarded for other examples of the invention.

As it was said before in this section of the memory of the invention, the resulting fabric 1 is applied to a formed parts even though it could be joined to non-formed parts in other applications, joining them by gluing, seaming, stapling, another conventional joining means or through a combination thereof, with which the ornamented part 6 constituted by the plastic formed part 5 and the fabric of the invention 1 can also have the aforementioned possibilities of visual appearance variation mentioned for fabric 1.

In the present example, the resulting fabric 1 is directly incorporated to part 5, even though in other embodiments a reinforcement support can be previously added, which is not showed in figures for being conventional and consisting of a plastic film, polyurethane, a sheet of textile fibers, other standard supporting material or a combination of any of said materials.

Furthermore, in the examples in which the resulting fabric 1 includes the aforementioned reinforcement support, both can be given a preform with heat and pressure.

## Claims

1. **NONWOVEN FABRIC WITH SPINNING PATTERN APPEARANCE,** applicable to formed and non-formed covering parts (5), ceilings, pillars or sunshades for automobiles among others, **characterized in that** it has a nonwoven fabric base (2, 3) on which some ornamental threads (4) are added and which by means of different separations and geometric configurations allow visual appearance variations in the resulting fabric (1) according to the characteristics and arrangement of said
ornamentation threads (4).

2. **NONWOVEN FABRIC WITH SPINNING PATTERN APPEARANCE,** according to claim 1, **characterized in that** for those ornamentation threads (4) threads of different materials, different thickness and various chromatic tones are used, which allow those visual appearance variations to be more noticeable.

3. **NONWOVEN FABRIC WITH SPINNING PATTERN APPEARANCE,** according to claim 1 or 2, **characterized in that** those ornamentation threads (4) are incorporated in the nonwoven fabric base (2, 3) in the manufacturing process of such base (2, 3), choosing its incorporation between a phase of that process and a later phase added to it.

4. **NONWOVEN FABRIC WITH SPINNING PATTERN , APPEARANCE,** according to any of the preceding claims, **characterized in that** such nonwoven fabric base (2, 3) is made of braided fibers as a warp (2) and weft (3).

5. **NONWOVEN FABRIC WITH SPINNING PATTERN APPEARANCE,** according to any of the preceding claims, **characterized in that** the incorporation of the ornamental threads (4) at the nonwoven fabric base (2, 3) is made by seaming.

6. **NONWOVEN FABRIC WITH SPINNING PATTERN APPEARANCE,** according to any of the preceding claims, **characterized in that** the aforementioned resulting fabric (1) is connected to a formed or non-formed part (5) by an action selected from: gluing, seaming, stapling, another conventional joining means and a combination thereof, in order to give that part (5) the aforementioned possibilities of variation of its visual appearance.

7. **NONWOVEN FABRIC WITH SPINNING PATTERN APPEARANCE,** according to any of the preceding claims, **characterized in that** the aforementioned fabric (1) resulting from the base (2, 3) with the ornamentation threads (4) can be provided with a reinforcement support.

8. **NONWOVEN FABRIC WITH SPINNING PATTERN APPEARANCE,** according to claim 7, **characterized in that** such reinforcement support is selected from a material of textile fibers, plastic film, polyurethane, other standard supporting material and any combination thereof.

9. **NONWOVEN FABRIC WITH SPINNING PATTERN APPEARANCE,** according to claim 7 or 8, **characterized in that** the aforementioned resulting fabric (1) with said reinforcement support can be given a preform with heat and pressure.
